# EUROPEAN PATENT SPECIFICATION

(11) **EP 0 473 882 B1**
(45) Date of publication and mention of the grant of the patent: **21.06.1995**
(21) Application number: 91108138.8
(22) Date of filing: 21.05.1991
(51) Int. Cl.: H01M 4/88, H01M 8/14

(54) **A method for manufacturing cathodes for molten carbonate cells**
Verfahren zur Herstellung von Kathoden für Zellen mit geschmolzenen Karbonat-Elektrolyten
Méthode pour fabriquer des cathodes pour éléments galvaniques à carbonates fondus

(30) Priority: 01.06.1990 IT 1246990
(43) Date of publication of application: 11.03.1992
(73) Proprietor: FINMECCANICA S.p.A. AZIENDA ANSALDO, I-16128 Genova (IT)
(72) Inventor: Antolini,Ermete, c/o ANSALDO S.p.A., I-16128 Genova (IT)
(74) Representative: De Nova, Roberto

(56) References cited:
- US-A- 4 386 040
- US-A- 4 891 280

## Description

This invention relates to a method for manufacturing cathodes for molten carbonate cells of the type referred to in the related art as MCFC (Molten Carbonate Fuel Cells).

In particular, this invention relates to a method for manufacturing cathodes of nickel oxide-lithium for such molten carbonate cells.

Cathodes currently employed in molten carbonate cells are made of nickel oxide-lithium (usually including 2% cationic lithium), and have overall porosity of 60-70% by volume and an average pore diameter of about 6 micrometers.

Two preparation techniques are provided by the state of the art pertaining to the manufacture of such cathodes, respectively referred to as "in situ" and "ex situ" techniques.

The "in situ" preparation technique starts with the preparation of a green material comprised of a slurry of nickel and organic binders (methyl cellulose, polyvinyl alcohol). This slurry may be obtained, for example, by continuous pouring over a running tape.

Alternatively, said starting green might comprise a mixture of dry cold-pressed powders including nickel and pore generating agents (stearic acid, benzoic acid, magnesium oxide, etc.)

The green obtained in either of the foregoing ways is then pre-sintered under a reducing medium at temperatures in the 700° to 900°C range, to yield a nickel plate having highly porous features.

This plate is positioned inside the cell to form the cathode thereof, and it is inside the cell that the nickel is oxidized to yield a solid solution of LiNiO.

The conventional "in situ" preparation technique just described has a disadvantage in that during oxidation and lithiation of the nickel inside the cell an expansion takes place which may result in the cathode being ruptured due to the spatial restrictions from the walls of the cell, concurrently therewith, a loss in porosity and decreased average size of the pores are incurred with respect to the values attained during the pre-sintering step.

In addition, "in situ" lithiation requires that the amount of lithium for doping the nickel oxide be supplied by the electrolyte, which will deplete the electrolyte and alter the composition of the eutectic mixture of molten carbonates.

Finally, this prior technique requires that the green be pre-sintered under a reducing medium, which aggravates the manufacturing process costs in terms of energy and gas input.

A cathode for MCFC, obtained by the "in situ" technique, using LiKCO₃ as the electrolyte, is disclosed in U.S. Patent No. 4,891,280.

The second prior technique of cathode manufacture, referred to as the "ex situ" technique, provides for the preparation of the electrode in its final form prior to fitting it into the cell, in order to avoid problems of volume expansion and loss of control over porosity, such as occurred with the previously mentioned method.

The two known techniques for obtaining cathodes by the "ex situ" process are as follows:
(a) sintering a green material consisting of a mixture of nickel or nickel oxide, lithium carbonate, and organic binders, either in air or an atmosphere of oxygen, at temperatures in the range of 800° to 1200°;
(b) pre-oxidizing a plate of porous nickel, followed by either "in situ" or "ex situ" lithiation.

Cathodes prepared "ex situ" have improved characteristics as regards mechanical strength, porosity control, and electric conductiveness.

However, the in-cell performance of "ex situ" prepared cathodes is generally inferior to that of cathodes prepared "in situ".

This is explained by that the optimum microstructure for cell operation is to be obtained by "in situ" oxidation of theplate, which promotes the formation of a two-mode porosity in the electrode, with large pores to facilitate the flow of gas through the electrode, and small pores for absorbing and retaining the electrolyte, as required for the electrochemical reactions and ion contact with the electrolytic matrix.

The method of this invention can do without the pre-sintering step as provided by both of the methods just described.

According to this invention, a slurry comprising nickel powder, lithium carbonate, methyl cellulose, and non-foaming agent is first prepared, and this slurry is poured continuously onto a moving tape to provide a green material, i.e. a uniform layer of the slurry.

As is known, the same will acquire a texture that allows of simple handling , and hence of its introduction into the cell, prior to undergoing any heat treatment.

By a second step to be carried out within the cell, the organics present in the green material are removed, the nickel is oxidized, and the plate densified.

Since the green material had not been pre-sintered prior to its introduction into the cell, and on account of the formulation employed, during oxidation no volume increase will take place as it does instead with the well-known technique of "in situ" oxidation, avoiding, therefore, the problems connected with this phenomenon.

In addition, to lithiate the nickel oxide, the melting of the carbonates is no pre-requisite because the lithium carbonate present in the green material is decomposed concurrently with the nickel oxidation at a lower temperature than the melting temperature of the carbonates.

Thus, the depletion of lithium carbonate in the carbonate mixture can be prevented.

The lack of pre-sintering of the plate brings about a reduction in the costs for energy over the previously described conventional methods.

The results of tests carried out in the cell over a time span of 700 hours reveal performance levels equal to, of even better than, those to be obtained with cathodes manufactured with the previously described techniques.

The essential features of the invention are summarized and schematized in the claims; its objects and advantages, moreover, will be apparent from the following description, given with specific reference to an embodiment of this method and the accompanying drawings, where:
Figure 1 is a graph of the volume variation of a cathode embodying this invention versus variation of the proportion of lithium; and
Figure 2 shows graphically the behavior of the current density from molten carbonate cells using different types of cathodes, among which the claimed one.

### EXAMPLE

A rotating vessel containing 250 g of aluminum balls has been loaded with:
125 g of nickel powder of the INCO 255 (trade name) type;
7 g of lithium carbonate, a Merck's product, capable of yielding a solid solution of LiNiO with a lithium content of 6%;
7 g of methyl cellulose;
2.5 g of non-foaming agent; and
250 g of de-ionized water.

The above was milled by means of said aluminum balls and stirred for 24 hours.

The resulting mixture was degassed under a vacuum to remove the air entrapped therein while stirring.

Thereafter, the mixture was spread over a flat surface formed of sheet glass coated with beeswax to facilitate subsequent peeling of the green material thus obtained, using a tape casting technique, at a pouring rate of 10 cm/min, the doctoring blade thickness being in the range of 1 to 5 mm, according to the thickness of the green material sought.

The green material yielded was then cut into disks with a diameter of 50 mm and tested as the cathode of a molten carbonate cell. In the cell, the anode comprised 90% nickel and 10% nickeled alumina; the cell matrix was composed of lithium aluminate as obtained by the hot pressing technique; the electrolyte was comprised of an eutectic mixture of lithium and potassium carbonates.

The cell was then heated to 650°C, which corresponds to the operating temperature thereof. At this temperature, the electrolyte will be in a molten state, of course.

It should be noted, however, that prior to reaching the melting temperature of the electrolyte, the gradual heating of the entire cell, and hence of the green material, will cause the organics to be removed therefrom, the nickel to become oxidized, and the plate densified which will not expand due to its composition and because it has not been pre-sintered.

In addition, the lithiation of the nickel oxide will take place at the expense of the lithium carbonate present in the green material, which decomposes concurrently with the nickel oxidation and at lower temperatures than the melting temperature of the carbonates which make up the electrolyte.

In this way, and as mentioned hereinabove, the mixture of carbonates making up the electrolyte is not depleted of lithium carbonate.

The savings in energy are apparent.

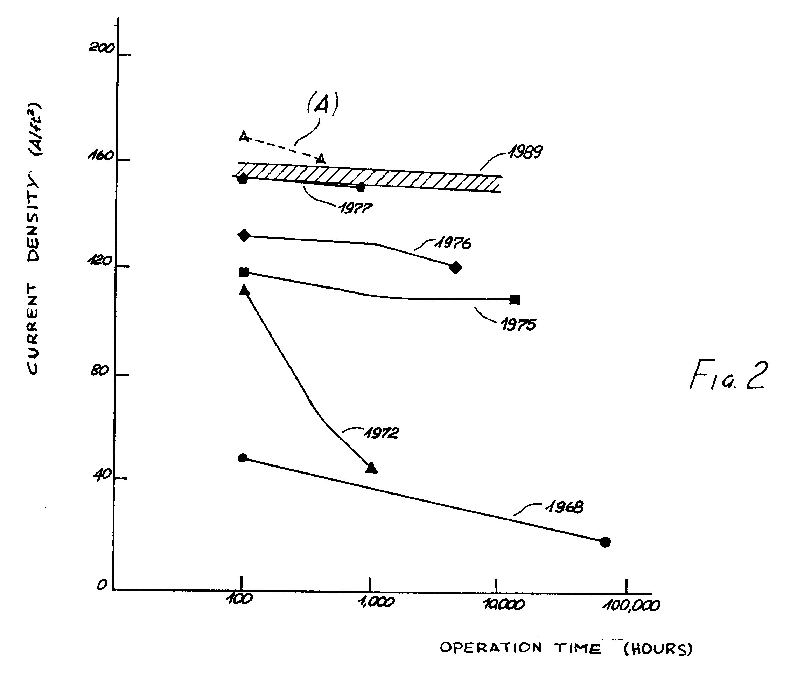

After 200 hours operation at 650°C, the cell performance was 3.3 A at 0.75 V, the maximum output power being 128 Watts/square foot = (1378 W/m²). As illustrated by Figure 2, to whose description the reader is directed, this value represents a world best as of this date.

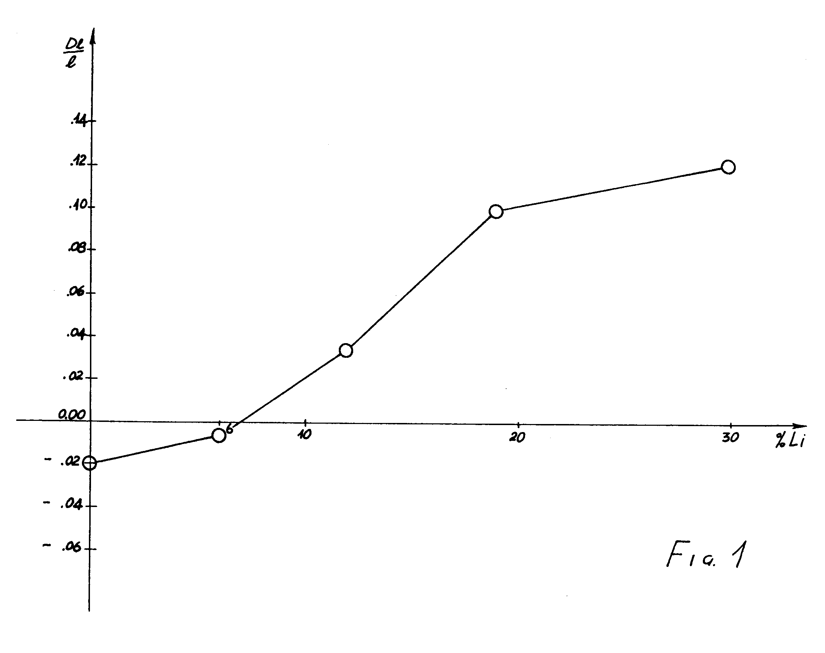

As mentioned in the foregoing, Figure 1 shows a graph bringing out the volume variation of a cathode according to the invention versus the proportion of lithium; as may be appreciated, when the atomic lithium content of the green is approximately 6%, with the claimed composition no increase in volume occurs during the nickel oxidizing process. Thus, the cathode of this invention will be provided with the same mechanical strength as the cathodes formed "ex situ" but with none of their faults.

With particular reference to Figure 2, there is plotted the output current density versus operation time, in molten carbonate cells made in the period from 1968, when they were first experimented with, to 1989; the numeral attached to each curve designates, of course, their testing dates on cathodes of presently known type.

The dash-line curve at the top, denoted (A), illustrates the operation of a cell according to the invention, this curve being concluded at 700 hours of operation.

While for descriptive reasons this invention stands on what has been described and illustrated herein, several modifications and variations may be applied in implementing the invention within the scope of the appended claims.

## Claims

1. A method for manufacturing lithiated nickel oxide cathodes for molten carbonate cells, characterized in that, in a first step, a green material is prepared from nickel powder and lithium carbonate intimately mixed together, in a second step, said green material is introduced into the cell and the cell is heated to operating temperature.

2. A method for manufacturing lithiated nickel oxide cathodes according to the preceding claim, characterized in that said green material comprises nickel powder and lithium carbonate, methyl cellulose, and a non-foaming agent.

3. A method for manufacturing lithiated nickel oxide cathodes according to the preceding claim, characterized in that said compounds are finely ground, degassed, and additivated with water.

4. A method for manufacturing lithiated nickel oxide cathodes according to the preceding claim, characterized in that said compounds are provided in the following proportions by weight:
nickel powder -- 100-150 parts,
lithium carbonate powder -- 6-9 parts,
methyl cellulose -- 6-9 parts,
non-foaming agent -- 2-3 parts,
de-ionized water -- 200-300 parts.

5. A method for manufacturing lithiated nickel oxide cathodes according to the preceding claim, characterized in that said mixture is ground and stirred, and then degassed under a vacuum; thereafter, it is spread over a smooth surface using the tape casting technique, and finally cut into the form of electrodes and placed directly into the cell.

## Patentansprüche

1. Verfahren zur Herstellung von Kathoden aus mit Lithium versetztem Nickeloxid für Schmelzcarbonatzellen, dadurch gekennzeichnet, daß in einem ersten Schritt ein Rohmaterial aus innig miteinander vermischtem Nickelpulver und Lithiumcarbonat hergestellt wird und daß in einem zweiten Schritt das Rohmaterial in die Zelle eingebracht und die Zelle auf Betriebstemperatur erwärmt wird.

2. Verfahren zur Herstellung von Kathoden aus mit Lithium versetztem Nickeloxid nach dem vorhergehenden Anspruch, dadurch gekennzeichnet, daß das Rohmaterial Nickelpulver und Lithiumcarbonat, Methylcellulose sowie ein nicht schäumendes Agens beinhaltet.

3. Verfahren zur Herstellung von Kathoden aus mit Lithium versetztem Nickeloxid nach dem vorhergehenden Anspruch, dadurch gekennzeichnet, daß die Verbindungen fein zerkleinert, entgast und mit Wasser versetzt werden.

4. Verfahren zur Herstellung von Kathoden aus mit Lithium versetztem Nickeloxid nach dem vorhergehenden Anspruch, dadurch gekennzeichnet, daß die Verbindungen in folgenden Gewichtsverhältnissen vorgesehen sind:
Nickelpulver - 100 Teile bis 150 Teile,
Lithiumcarbonatpulver - 6 Teile bis 9 Teile,
Methylcellulose - 6 Teile bis 9 Teile,
nicht schäumendes Agens - 2 Teile bis 3 Teile,
deionisiertes Wasser - 200 Teile bis 300 Teile.

5. Verfahren zur Herstellung von Kathoden aus mit Lithium versetztem Nickeloxid nach dem vorhergehenden Anspruch, dadurch gekennzeichnet, daß das Gemisch zerkleinert und gerührt und dann unter Vakuum entgast wird; danach wird es über einer glatten Oberfläche unter Verwendung der Bandgießtechnik verteilt und schließlich in die Form von Elektroden geschnitten und direkt in der Zelle angeordnet.

## Revendications

1. Procédé de fabrication de cathodes à base d'oxyde de nickel lithié pour cellules à carbonate fondu, caractérisé en ce que dans une première étape, on prépare un matériau brut (vert) à partir de poudre de nickel et de carbonate de lithium mélangés ensemble intimement, dans une deuxième étape, ledit matériau brut est introduit dans la cellule et la cellule est chauffée à la température de travail.

2. Procédé de fabrication de cathodes à base d'oxyde de nickel lithié selon la revendication précédente, caractérisé en ce que ledit matériau brut comprend de la poudre de nickel et du carbonate de lithium, de la méthylcellulose et un agent non moussant.

3. Procédé de fabrication de cathodes à base d'oxyde de nickel lithié selon la revendication précédente, caractérisé en ce que lesdits composés sont finement broyés, dégazés, et en ce que l'on y ajoute de l'eau.

4. Procédé de fabrication de cathodes à base d'oxyde de nickel lithié selon la revendication précédente, caractérisé en ce que lesdits composés sont présents dans les proportions pondérales suivantes :
poudre de nickel -- 100-150 parts,
poudre de carbonate de lithium -- 6-9 parts,
méthylcellulose -- 6-9 parts,
agent non moussant -- 2-3 parts,
eau désionisée -- 200-300 parts.

5. Procédé de fabrication de cathodes à base d'oxyde de nickel lithié selon la revendication précédente, caractérisé en ce que ledit mélange est broyé et agité, puis dégazé sous vide ; après quoi il est épandu sur une surface lisse en utilisant une technique de coulage en bande, et finalement coupé en formes d'électrodes qui sont placées directement dans la cellule.
